# EUROPÄISCHE PATENTSCHRIFT

(11) **EP 0 725 262 B1**
(45) Veröffentlichungstag und Bekanntmachung des Hinweises auf die Patenterteilung: **01.03.2000**
(21) Anmeldenummer: 95110039.5
(22) Anmeldetag: 28.06.1995
(51) Int. Cl.: G01D 5/04, G01D 11/00, G01D 11/24, H02K 37/24

(54) **Anzeigevorrichtung**
Display device
Dispositif d'affichage

(30) Priorität: 11.01.1995 DE 19500570
(43) Veröffentlichungstag der Anmeldung: 07.08.1996
(73) Patentinhaber: Mannesmann VDO AG, 60326 Frankfurt (DE)
(72) Erfinder: Keutz, Markus, D-64380 Rossdorf (DE)
(74) Vertreter: Klein, Thomas, Dipl.-Ing.

(56) Entgegenhaltungen:
- DE-A- 3 323 604
- DE-A- 3 937 149
- FR-A- 2 156 226
- US-A- 2 548 731
- US-A- 4 489 600
- US-A- 5 325 736
- PATENT ABSTRACTS OF JAPAN vol. 18, no. 436 (P-1786), 15.August 1994 & JP-A-06 137890 (YAZAKI), 20.Mai 1994,

## Beschreibung

Die Erfindung betrifft eine Anzeigevorrichtung mit einem schrittmotorischen Antrieb nach dem Oberbegriff des Anspruchs 1.

Zur Anzeige von Größen, welche in Form von digitalen Signalen vorliegen, werden häufig Anzeigevorrichtungen mit schrittmotorischem Antrieb verwendet. Dabei ist ein Schrittmotor über ein Getriebe mit dem eigentlichen Anzeigeelement verbunden, das meistens als Zeiger ausgebildet ist. Das Getriebe hat dabei die Aufgabe, ein genügend hohes Drehmoment für die Betätigung des Anzeigeelementes zur Verfügung zu stellen. Außerdem wird durch das Getriebe eine Verringerung der Schrittweite vorgenommen. Beide Aufgaben erfordern eine relativ hohe Untersetzung, die bei bekannten Anzeigevorrichtungen mit einem mehrstufigen Stirnradgetriebe realisiert wird.

JP-A-61 37 890 beschreibt eine Anzeigevorrichtung mit einem schrittmotorischen Antrieb, wobei ein Anzeigeelement mit einem Zahnrad antreibbar ist, das mit einer Schnecke im Eingriff steht, die über eine Schneckenwelle mit einem Schrittmotor verbunden ist.

Die bekannten Anzeigevorrichtungen mit Stirnradgetriebe benötigen bei gleicher Untersetzung und Größe des Abtriebszahnrades mehr als eine Getriebestufe, was zu höherer Bauteilezahl und damit zu höheren Kosten, zu erhöhtem Geräuschpegel und zu schlechterer Anzeigegenauigkeit führt.

Aufgabe der vorliegenden Erfindung ist es, diese Nachteile zu vermeiden und insbesondere eine kompakte, möglichst flache Bauform des Antriebs für die Anzeigevorrichtung zu ermöglichen.

Diese Aufgabe wird erfindungsgemäß durch die Merkmale des Anspruchs 1 gelöst.

Die erfindungsgemäße Anzeigevorrichtung weist außerdem den Vorteil auf, daß eine geringere Zahl von Bauteilen gegenüber den bekannten Anzeigevorrichtungen mit mehrstufigem Stirnradgetriebe erforderlich ist. Durch die Selbsthemmung der Schnecke bei entsprechender Auslegung ist das stromlose Halten des Anzeigeelementes, insbesondere großer Zeiger, möglich. Die erfindungsgemäße Anzeigevorrichtung ist für verschiedenartige Anzeigeelemente, beispielsweise Scheiben und Ziffernrollen, geeignet. Eine bevorzugte Ausführungsform besteht jedoch darin, daß das Anzeigeelement ein Zeiger ist, der verdrehfest auf einer das Zahnrad tragenden Welle angeordnet ist. Diese Ausführungsform ist in hervorragender Weise für Anzeigeinstrumente, wie beispielsweise Tachometer, Drehzahlmesser und Füllstandsmesser, geeignet.

Vorteilhafte Ausführungsformen der erfindungsgemäßen Anzeigevorrichtung bestehen darin, daß das Zahnrad mit einer Feder zum Ausgleich des Getriebespiels und/oder mit den Drehwinkel begrenzenden Anschlägen versehen ist.

Eine Weiterbildung der erfindungsgemäßen Anzeigevorrichtung sieht vor, daß das Zahnrad beidseitig mit Anlaufdomen versehen und auf einer Welle angeordnet ist, die auf einer Seite des Zahnrads weiter über das Zahnrad hinaussteht als auf der anderen Seite. Damit kann durch verschiedenes Einlegen des Zahnrades bei der Montage der erfindungsgemäßen Anzeigevorrichtung die Zeigerwelle wahlweise zu einer der beiden Seiten aus dem Gehäuse herausragen und somit bei gegebener elektrischer Ansteuerung eine Drehung im Uhrzeigersinn oder entgegengesetzt zum Uhrzeigersinn vorgesehen werden.

Eine weitere Weiterbildung der Erfindung sieht vor, daß die Schneckenwelle in unmittelbarer Nähe der Enden der Schnecke in jeweils einem Lagerbock gelagert ist und daß die Lagerböcke einteilig mit einem Gehäuse und offen zum Einschnappen der Schneckenwelle ausgeführt sind. Damit wird ein axiales Spiel der Schnecke vermieden.

Eine andere Weiterbildung der erfindungsgemäßen Anzeigevorrichtung zeichnet sich dadurch aus, daß ein das Zahnrad, die Schnecke und den Schrittmotor umfassendes Gehäuse aus zwei gleichen im wesentlichen spiegelsymmetrisch ausgebildeten Schalen besteht. Dadurch sind geringe Kosten, unter anderem für die Herstellung der Form und für die Montage möglich. Bei dieser Weiterbildung kann es allerdings vorteilhaft sein, daß einzelne Anformungen zwar bezüglich ihrer Lage spiegelbildlich, jedoch in ihrer Ausgestaltung selbst komplementär zueinander sind, beispielsweise Öffnungen und Dorne zur Verbindung der Gehäuseschalen untereinander. Eine Verbindung der Gehäuseschalen untereinander ist mit Hilfe von Rasten (Einschnapp-Verbindungen) möglich.

Bei dieser Weiterbildung ist ferner vorzugsweise vorgesehen, daß in den Schalen Aufnahmeöffnungen für Kontaktstifte in der Nähe von Wicklungsenden der Statoren vorgesehen sind, wobei jeweils eine Aufnahmeöffnung in einer der Schalen mit einer Aufnahmeöffnung in der anderen Schale fluchtet, und daß die Kontaktstifte einseitig über die Gehäuseoberfläche hinausragen. Hierdurch wird die Montage weiter vereinfacht und durch entsprechendes Einlegen der Kontaktstifte eine vor- oder rückseitige Kontaktierung möglich.

Ein fester Sitz der Kontaktstifte kann dadurch erreicht werden, daß die Kontaktstifte eine symmetrisch zur Gehäusemitte angeordnete Prägung und die Aufnahmeöffnungen eine zur Gehäusemitte konisch verlaufende Ausprägung aufweisen.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: eine Ansicht des Ausführungsbeispiels bei geöffnetem Gehäuse,
- Fig. 2: einen Schnitt bei A-B in Fig. 1 und
- Fig. 3: einen Schnitt bei C-D in Fig. 1.

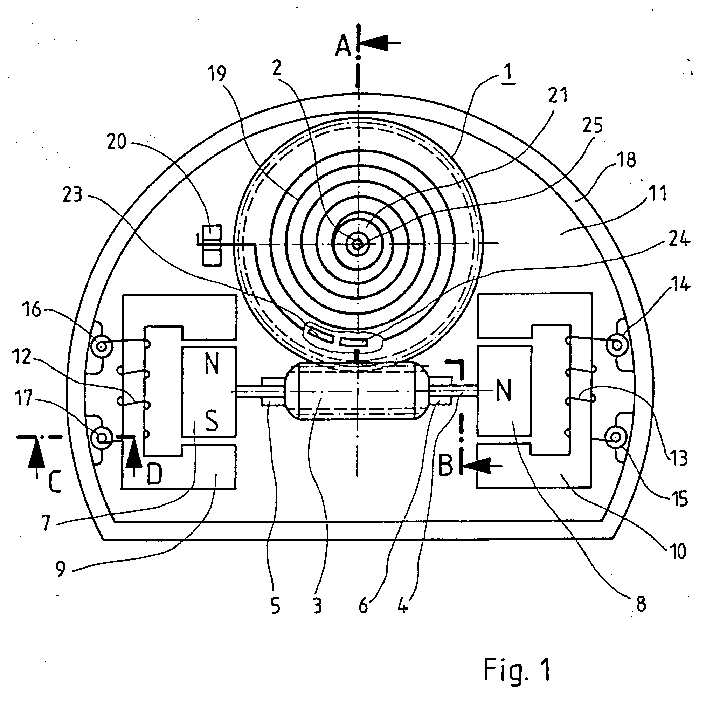

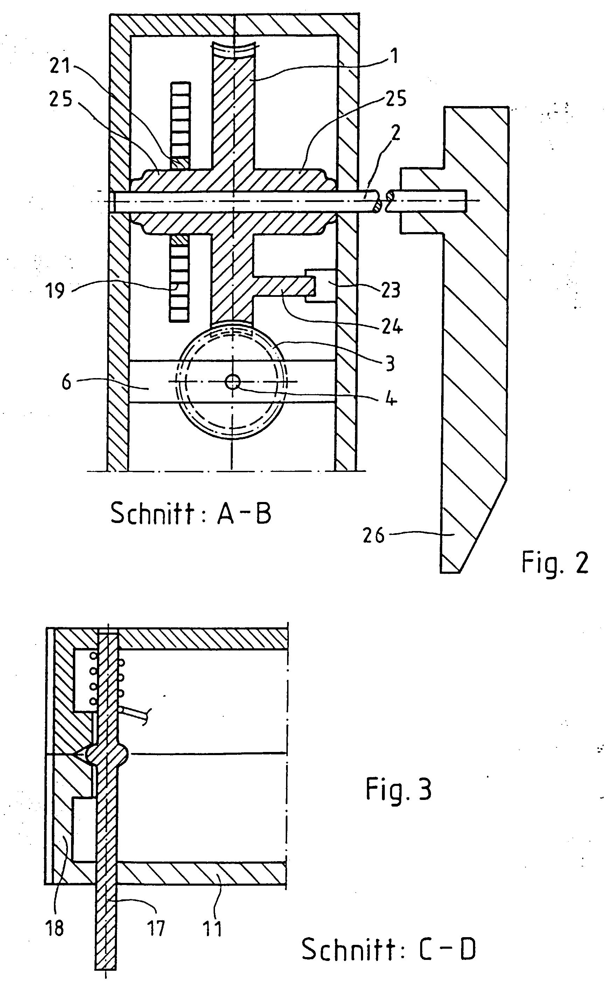

Gleiche Teile sind in den Figuren mit gleichen Bezugszeichen versehen. Die Figuren 2 und 3 sind gegenüber Fig. 1 etwas vergrößert ausgeführt.

Bei dem dargestellten Ausführungsbeispiel ist ein Zahnrad 1 auf der Welle 2 eines Zeigers 26 (Fig. 2) angeordnet. Das Zahnrad 1 befindet sich im Eingriff mit einer Schnecke 3, die auf einer Schneckenwelle 4 angeordnet ist, die wiederum in Lagerböcken 5, 6 drehbar gelagert ist. An den Enden der Schneckenwelle 4 befinden sich zwei Rotoren 7, 8, die jeweils einen Nord- und einen Südpol aufweisen und um 90° gegeneinander verdreht sind. Die dazugehörigen Statoren 9, 10 sind als Stanz- bzw. Biegeteile ausgeführt und können wegen der Zweiteilung des Schrittmotors und der 90°-Verdrehung der Rotoren derart flach ausgeführt werden, daß sie nicht zu einer Vergrößerung der Bautiefe beitragen. Sie werden von im einzelnen nicht dargestellten Aufnehmungen der Gehäuseschalen, von denen in Fig. 1 nur eine Schale 11 sichtbar ist, gehalten. Die schematisch dargestellten Spulen 12, 13 werden unmittelbar auf die Statoren 9, 10 aufgewickelt und mit ihren Enden durch eine Wrap-Technik mit Kontaktstiften 14 bis 17 verbunden. Die Gehäuseschalen 11 weisen jeweils einen Rand 18 zum Abschluß des Gehäuses nach außen auf.

Eine Spiralfeder 19, die zwischen einem gehäusefesten Lager 20 und einer Nabe 21 des Zahnrades 1 wirkt, spannt das Zahnrad 1 gegenüber der Schnecke 3 vor, so daß ein zwischen dem Zahnrad 1 und der Schnecke 3 an sich vorhandenes Spiel keine Auswirkungen auf die Anzeigegenauigkeit hat.

Anschlagteile 23, 24 sind einerseits mit dem feststehenden Gehäuse und andererseits mit dem Zahnrad 1 verbunden, um den Drehwinkel des Zahnrades 1 zu begrenzen. Um sie in Fig. 1 sichtbar zu machen, ist das Zahnrad 1 entsprechend aufgeschnitten.

Das Zahnrad 1 ist ferner zu beiden Seiten mit Anlaufdomen 25 versehen. Mit diesen Anlaufdomen wird ein axiales Spiel der Zeigerwelle 2 begrenzt. Dadurch, daß in beiden Gehäuseschalen durchgehende Lager für die Zeigerwelle 2 vorhanden sind, kann die Zeigerwelle beim Aufpressen des Zeigers 26 am kurzen Wellenstummel gestützt werden.

Im folgenden werden nochmals kurz die Möglichkeiten zusammengefaßt, die erfindungsgemäße Anzeigevorrichtung trotz gleicher Einzelteile bei der Montage an verschiedene Anwendungsfälle anzupassen. Einerseits ist es möglich, die Schneckenwelle 4 mit der Schnecke 3 und den Rotoren 7, 8 in zwei verschiedenen Richtungen anzulegen. Damit ist die Beeinflussung der Drehrichtung bei ansonsten gleicher elektrischer Ansteuerung möglich - ähnlich wie das bereits erwähnte verschiedene Einlegen der Zeigerwelle 2. Andererseits können die Kontaktstifte 14 bis 17 mit dem längeren aus dem Gehäuse herausstehenden Ende entweder nach unten oder nach oben eingelegt werden. Damit sind insgesamt vier verschiedene Bauformen bezüglich der Drehrichtung und bezüglich der Kontaktierungsseite möglich.

## Patentansprüche

1. Anzeigevorrichtung mit einem schrittmotorischen Antrieb, wobei ein Anzeigeelement mit einem Zahnrad (1) antreibbar ist, das mit einer Schnecke (3) im Eingriff steht, die über eine Schneckenwelle (4) mit einem Schrittmotor (7, 8, 9, 10) verbunden ist, dadurch gekennzeichnet, daß der Schrittmotor von zwei auf beiden Enden der Schneckenwelle (4) verdrehfest angeordneten permanentmagnetischen Rotoren (7; 8) und zwei Statoren (9, 10) gebildet ist und daß die Rotoren (7; 8) um eine halbe Polteilung, vorzugsweise 90°, gegeneinander verdreht angeordnet sind.

2. Anzeigevorrichtung nach Anspruch 1, dadurch gekennzeichnet, daß das Anzeigeelement ein Zeiger ist, der verdrehfest auf einer das Zahnrad (1) tragenden Welle (2) angeordnet ist.

3. Anzeigevorrichtung nach einem der Ansprüche 1 oder 2, dadurch gekennzeichnet, daß das Zahnrad (1) mit einer Feder (19) zum Ausgleich des Getriebespiels versehen ist.

4. Anzeigevorrichtung nach einem der Ansprüche 1 bis 3, dadurch gekennzeichnet, daß das Zahnrad (1) mit den Drehwinkel begrenzenden Anschlägen (23, 24) versehen ist.

5. Anzeigevorrichtung nach einem der vorhergehenden Ansprüche, dadurch gekennzeichnet, daß das Zahnrad (1) beidseitig mit Anlaufdomen (25) versehen und auf einer Welle (2) angeordnet ist, die auf einer Seite des Zahnrads (1) weiter über das Zahnrad (1) hinaussteht als auf der anderen Seite.

6. Anzeigevorrichtung nach einem der vorstehenden Ansprüche, dadurch gekennzeichnet, daß die Schneckenwelle (4) in unmittelbarer Nähe der Enden der Schnecke (3) in jeweils einem Lagerbock (5; 6) gelagert ist und daß die Lagerböcke (5; 6) einteilig mit einem Gehäuse (11) und offen zum Einschnappen der Schneckenwelle (4) ausgeführt sind.

7. Anzeigevorrichtung nach einem der vorhergehenden Ansprüche, dadurch gekennzeichnet, daß ein das Zahnrad (1), die Schnecke (3) und den Schrittmotor (7, 8, 9, 10) umfassendes Gehäuse aus zwei gleichen im wesentlichen spiegelsymmetrisch ausgebildeten Schalen (11) besteht.

8. Anzeigevorrichtung nach Anspruch 7, dadurch gekennzeichnet, daß in den Schalen (11) Aufnahmeöffnungen für Kontaktstifte (14 - 17) in der Nähe von Wicklungsenden der Statoren (9, 10) vorgesehen sind, wobei jeweils eine Aufnahmeöffnung in einer der Schalen mit einer Aufnahmeöffnung in einer anderen Schale fluchtet, und daß die Kontaktstifte einseitig über die Gehäuseoberfläche hinausragen.

9. Anzeigevorrichtung nach Anspruch 8, dadurch gekennzeichnet, daß die Kontaktstifte (14 bis 17) eine symmetrisch zur Gehäusemitte angeordnete Prägung und die Aufnahmeöffnungen eine zur Gehäusemitte konisch verlaufende Ausprägung aufweisen.

## Claims

1. Display device having a stepping motor drive, in which a display element can be driven with a gearwheel (1) which is in engagement with a worm (3) connected to a stepping motor (7, 8, 9, 10) via a worm shaft (4), characterized in that the stepping motor is formed by two permanently magnetic rotors (7; 8), which are arranged so as to be secured against rotation on the two ends of the worm shaft (4), and two stators (9, 10), and in that the rotors (7; 8) are arranged so as to be rotated through half a pole pitch, preferably 90°, with respect to one another.

2. Display device according to Claim 1, characterized in that the display element is a pointer which is arranged so as to be secured against rotation on a shaft (2) carrying the gearwheel (1).

3. Display device according to one of Claims 1 and 2, characterized in that the gearwheel (1) is provided with a spring (19) for compensating for the gear play.

4. Display device according to one of Claims 1 to 3, characterized in that the gearwheel (1) is provided with stops (23, 24) limiting the angle of rotation.

5. Display device according to one of the preceding claims, characterized in that the gearwheel (1) is provided with butting domes (25) on both sides and is arranged on a shaft (2) which protrudes beyond the gearwheel (1) further on one side of the gearwheel (1) than on the other side.

6. Display device according to one of the preceding claims, characterized in that the worm shaft (4) is mounted in a respective pillow block (5; 6) in the immediate vicinity of the ends of the worm (3), and in that the pillow blocks (5; 6) are of integral design with a housing (11) and are designed to be open for the worm shaft (4) to snap into.

7. Display device according to one of the preceding claims, characterized in that a housing comprising the gearwheel (1), the worm (3) and the stepping motor (7, 8, 9, 10) is made of two identical shells (11) of essentially mirror-image symmetrical design.

8. Display device according to Claim 7, characterized in that the shells (11) are provided with locating openings for contact pins (14 - 17) near to winding ends of the stators (9, 10), each locating opening in one of the shells being flush with a locating opening in another shell, and in that one end of the contact pins projects beyond the housing surface.

9. Display device according to Claim 8, characterized in that the contact pins (14 to 17) have a boss arranged symmetrically with respect to the centre of the housing, and the locating openings have an indentation which extends conically towards the centre of the housing.

## Revendications

1. Dispositif d'affichage avec une commande par moteur pas-à-pas, dans lequel on peut entraîner un élément d'affichage avec une roue dentée (1) qui est en prise avec une vis sans fin (3) qui est connectée par l'intermédiaire d'un arbre de vis sans fin (4) à un moteur pas-à-pas (7, 8, 9, 10), caractérisé en ce que le moteur pas-à-pas est formé par deux rotors (7; 8) à aimants permanents disposés fixes en rotation aux deux extrémités de l'arbre à vis sans fin (4) et deux stators (9, 10) et en ce que les rotors (7; 8) sont tournés l'un par rapport à l'autre d'un demi-écartement polaire, de préférence de 90°.

2. Dispositif d'affichage selon la revendication 1, caractérisé en ce que l'élément d'affichage est une aiguille, qui est disposée fixe en rotation sur un arbre (2) portant la roue dentée (1).

3. Dispositif d'affichage selon l'une quelconque des revendications 1 ou 2, caractérisé en ce que la roue dentée (1) est pourvue d'un ressort (19) pour compenser le jeu des engrenages.

4. Dispositif d'affichage selon l'une quelconque des revendications 1 à 3, caractérisé en ce que la roue dentée (1) est pourvue de butées (23, 24) limitant l'angle de rotation.

5. Dispositif d'affichage selon l'une quelconque des revendications précédentes, caractérisé en ce que la roue dentée (1) est pourvue des deux côtés de dômes de départ (25) et est disposée sur un arbre (2), qui sort plus d'un côté de la roue dentée (1) que de l'autre côté.

6. Dispositif d'affichage selon l'une quelconque des revendications précédentes, caractérisé en ce que l'arbre de vis sans fin (4) est monté à proximité immédiate des extrémités de la vis sans fin (3) à chaque fois dans un palier (5; 6) et en ce que les paliers (5; 6) sont réalisés d'une pièce avec un boîtier (11) et sont ouverts pour l'encliquetage de l'arbre de vis sans fin (4).

7. Dispositif d'affichage selon l'une quelconque des revendications précédentes, caractérisé en ce qu'un boîtier comprenant la roue dentée (1), la vis sans fin (3) et le moteur pas-à-pas (7, 8, 9, 10) se compose de deux coques identiques (11) réalisées essentiellement suivant une symétrie spéculaire.

8. Dispositif d'affichage selon la revendication 7, caractérisé en ce que des ouvertures de réception pour des broches de contact (14 - 17) sont prévues dans les coques (11) à proximité d'extrémités d'enroulement des stators (9, 10), une ouverture de réception étant à chaque fois alignée dans l'une des coques avec une ouverture de réception dans une autre coque, et en ce que les broches de contact font saillie d'un côté à la surface du boîtier.

9. Dispositif d'affichage selon la revendication 8, caractérisé en ce que les broches de contact (14 à 17) présentent un bossage disposé symétriquement par rapport au centre du boîtier et les ouvertures de réception présentent une empreinte s'étendant de manière conique vers le centre du boîtier.
